# EUROPÄISCHE PATENTANMELDUNG

(11) **EP 1 475 279 A2**
(43) Veröffentlichungstag der Anmeldung: **10.11.2004**
(21) Anmeldenummer: 04009843.6
(22) Anmeldetag: 26.04.2004
(51) Int. Cl.: B60R 21/20

(54) **Baugruppe zur Befestigung eines Gassackmoduls**

(30) Priorität: 07.05.2003 DE 20307142 U
(71) Anmelder: TRW Automotive Safety Systems GmbH, 63743 Aschaffenburg (DE)
(72) Erfinder: Scherer, Ralf, 63739 Aschaffenburg (DE)
(74) Vertreter: Kitzhofer, Thomas, Dipl.-Ing.

(57) **Zusammenfassung**

Eine Baugruppe zur Befestigung eines Gassackmoduls (10) an einem Fahrzeug, insbesondere in einem Lenkrad, weist ein erstes und ein zweites, miteinander in Eingriff stehendes Rastelement auf, die bei geschlossener Rastverbindung (14, 22) in einer Bewegungsrichtung (R) über einen definierten Verschiebeweg (W) relativ zueinander bewegbar sind. Das erste Rastelement (14) weist eine Einbuchtung (16) auf, in der ein schräg zur Bewegungsrichtung (R) des Gassackmoduls (10) verlaufender Anlagebereich (20) ausgebildet ist. Das zweite Rastelement weist wenigstens einen Rastabschnitt (22) auf, der mit dem Anlagebereich (20) in Anlage bringbar ist. Der Rastabschnitt (22) liegt über den gesamten Verschiebeweg (W) unter Vorspannung (F) am Anlagebereich (20) an.

## Beschreibung

Die Erfindung betrifft eine Baugruppe zur Befestigung eines Gassackmoduls an einem Fahrzeug, insbesondere an einem Lenkrad..

Die Fixierung des Gassackmoduls im Lenkrad erfolgt häufig über Rastverbindungen, die bevorzugt so ausgelegt sind, daß das Gassackmodul in einer Bewegungsrichtung, die mit der Achsrichtung des Gassackmoduls bzw. der Rotationsachse des Lenkrads zusammenfällt, in das Lenkrad hinein bewegbar ist, um eine Hupe zu betätigen. Bei dieser Bewegung bewegen sich die Rastelemente relativ zueinander, ohne daß jedoch die Rastverbindung gelöst wird. Im normalen Fahrbetrieb, also wenn die Hupe nicht betätigt wird, ist das Gassackmodul meist durch Federelemente beaufschlagt, die es an einer Bewegung in Achsrichtung, zum Beispiel durch Fahrzeugschwingungen, hindern. Es ist jedoch nicht möglich, jegliche geringfügige Relativbewegung zwischen den beiden Rastelementen zu unterbinden, so daß zusätzliche Vorkehrungen getroffen werden müssen, um durch derartige Bewegungen induzierte Klappergeräusche zu verhindern. Bekannte Lösungen umfassen das Vorsehen zusätzlicher Dämpfungselemente zwischen den Rastelementen oder das Aufbringen einer Kunststoffbeschichtung zur Geräuschdämpfung. Beide Methoden bedeuten einen zusätzlichen Aufwand und zusätzliche Kosten im Herstellungsprozeß.

Die Erfindung schafft eine Baugruppe, in der Klappergeräusche zwischen den Rastelementen auf einfache Art und Weise vermieden werden.

Dies wird erreicht, indem die oben beschriebene Baugruppe so ausgebildet ist, daß ein erstes und ein zweites, miteinander in Eingriff stehendes Rastelement vorgesehen sind, die bei geschlossener Rastverbindung in einer Bewegungsrichtung über einen definierten Verschiebeweg relativ zueinander bewegbar sind, wobei das erste Rastelement eine Einbuchtung aufweist, in der ein schräg zur Bewegungsrichtung des Gassackmoduls verlaufender Anlagebereich ausgebildet ist und das zweite Rastelement wenigstens einen Rastabschnitt aufweist, der mit dem Anlagebereich in Anlage bringbar ist, und wobei der Rastabschnitt über den gesamten Verschiebeweg unter Vorspannung am Anlagebereich anliegt. Da sich während einer Relativbewegung in Bewegungsrichtung die beiden Rastelemente nie voneinander lösen, können Klappergeräusche nicht auftreten. Die ständige Anlage der beiden Rastelemente aneinander läßt sich allein durch die geometrische Formgebung der Einbuchtung bzw. des Anlagebereichs sowie die Einstellung der Vorspannung, unter der die Rastelemente aneinander anliegen, erreichen. Auf zusätzliche Dämpfungselemente oder Beschichtungen kann vollständig verzichtet werden.

In einem sogenannten Floating Horn-Gassackmodul ist der Verschiebeweg vorzugsweise der Hub zur Betätigung einer Hupe. Der Verschiebeweg kann aber auch kleiner gewählt sein, so daß er nur das Spiel ist, das nach der Montage zwischen Gassackmodul und Fahrzeug vorhanden ist.

In einer bevorzugten Ausführungsform der Erfindung ist der Anlagebereich konkav gekrümmt. Er kann jedoch auch durch eine linear oder nichtlinear verlaufende Schräge realisiert sein, und er kann über den gesamten Verschiebeweg schräg zur Bewegungsrichtung verlaufen.

Der Rastabschnitt kann Teil eines Federdrahts sein. Die Einbuchtung ist bevorzugt an einem Rasthaken ausgebildet.

Wenn die Einbuchtung unmittelbar nach einer sich senkrecht zur Bewegungsrichtung erstreckenden Hakenrückseite schräg verlauft, ergibt sich der Vorteil, daß die Hakenrückseite einen Endanschlag für die Relativbewegung der beiden Rastelemente bilden kann, während jegliche Relativbewegung zwischen den Rastelementen ausgehend von der durch den Endanschlag definierten Position sofort entlang des Anlagebereichs erfolgt.

Eine derartige Gestaltung läßt sich auch an einem als Rastbolzen ausgebildeten Rasthaken erreichen.

In einer vorteilhaften Ausführungsform verläuft der Anlagebereich zu einem freien, verdickten Ende (z.B. einer Hakenspitze) des ersten Rastelements hin schräg nach außen. Dies erlaubt, die Erfindung unter Ausnutzung der Ersparnis an Materialkosten und Montageaufwand für eine Verwendung in konventionellen Rastverbindungen umzusetzen.

Das erste Rastelement ist bevorzugt mit dem Gassackmodul verbunden, während das zweite Rastelement mit einem Lenkradskelett verbunden ist. Die Anordnung der Rastelemente an diesen Bauteilen kann aber auch umgekehrt werden.

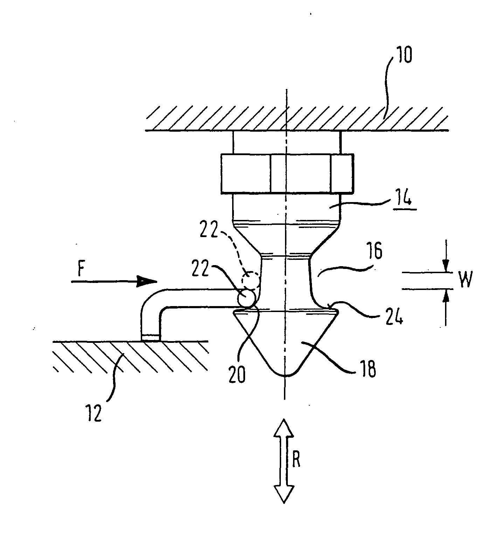

Weitere Merkmale und Vorteile der Erfindung ergeben sich aus der Beschreibung eines Ausführungsbeispiels in Verbindung mit der einzigen Figur, auf die im folgenden Bezug genommen wird.

Die Figur zeigt eine schematische Ansicht einer erfindungsgemäßen Baugruppe.

Die dargestellte Baugruppe dient zur Befestigung eines Gassackmoduls 10 an einem Lenkradskelett 12. Diese beiden Bauteile sind nur schematisch angedeutet, da ihre genaue Form sowie die Gestaltung der Verbindung der Rastelemente mit diesen Bauteilen für die Erfindung keine Rolle spielt.

Am Gassackmodul 10 sind als erste Rastelemente ein oder mehrere als Rastbolzen 14 ausgebildete Rasthaken angeordnet, die jeweils mit einer umlaufenden Einbuchtung 16 versehen sind. Am verdickten, freien, unteren Ende weist jeder Rastbolzen 14 eine kegelförmige Einschubrampe 18 auf, die auf bekannte Weise bei der Bildung der Rastverbindung eingesetzt wird.

In der Einbuchtung 16 ist ein Anlagebereich 20 ausgebildet, der sich schräg zu einer Bewegungsrichtung R des Gassackmoduls 10 erstreckt. Die Bewegungsrichtung R fällt mit der Axialrichtung des Gassackmoduls 10 bzw. der Rotationsachse des Lenkrades sowie der Verschiebungsrichtung des Gassackmoduls in das Lenkrad hinein zur Betätigung einer Hupe zusammen. Sie entspricht auch der Richtung, in der die Rastverbindung geschlossen wird.

Im hier dargestellten Beispiel endet der Anlagebereich 20 in einem unteren Anschlag, der durch eine sich senkrecht zur Bewegungsrichtung R erstreckende Hakenrückseite 24 gebildet ist, die eine Bewegung des Rastbolzens 14 nach oben aus dem Lenkrad hinaus begrenzt. Von der Hakenrückseite 24 aus verläuft der Anlagebereich 20 mit konkaver Krümmung zum Gassackmodul 10 hin, wobei der Anlagebereich 20 zum freien, verdickten Ende des Rastbolzens 14 hin, der die Einschubrampe 18 trägt, schräg nach außen verläuft.

Ein Rastabschnitt 22 eines zweiten Rastelements, das hier als langgestreckter, fest mit dem Lenkradskelett 12 verbundener Federdraht ausgebildet ist (dies ist in der Figur schematisch angedeutet), liegt im gezeigten geschlossenen Zustand der Rastverbindung am Anlagebereich 20 an.

Die beiden Rastelemente 14, 22 sind in der Bewegungsrichtung R um einen genau definierten Verschiebeweg W gegeneinander bewegbar. Dieser Verschiebeweg W kann zum Beispiel ein Hub zur Betätigung einer nicht gezeigten Hupe sein, also der Distanz zwischen zwei Hupkontakten entsprechen. Der Verschiebeweg W kann aber auch so klein sein, daß er lediglich einem Spiel entspricht.

Der Anlagebereich 20 erstreckt sich über den gesamten Verschiebeweg W und ist über den gesamten Verschiebeweg W gekrümmt bzw. schräg zur Bewegungsrichtung R ausgerichtet.

Der Rastabschnitt 22 liegt ständig unter einer Vorspannung F, die senkrecht zur Bewegungsrichtung R zum Rastbolzen 14 hin wirkt, am Anlagebereich 20 an. Dies ist über den gesamten Verschiebeweg W erfüllt. Bewegt sich also das erste Rastelement, d.h. der Rastbolzen 14 in Relation zum Rastabschnitt 22 in der Bewegungsrichtung R, so löst sich zu keiner Zeit der Kontakt zwischen dem Rastabschnitt 22 und dem Anlagebereich 20. Es kommt also niemals zu einer ruckhaften Bewegung der beiden Rastelemente gegeneinander, was zu einem Klappergeräusch fuhren könnte. Die Vorspannung F sowie der notwendige Bewegungsspielraum des Rastabschnittes 22 senkrecht zur Bewegungsrichtung R, der es dem Rastabschnitt 22 ermöglicht, sich entlang des Anlagebereichs 20 zu bewegen, und die Schräge bzw. Krümmung des Anlagebereichs 20 sind gemäß den jeweiligen Anforderungen so aufeinander abzustimmen, daß die ständige Anlage des Rastabschnitts 22 am Anlagebereich 20 gewährleistet ist.

Die Position des Rastabschnitts 22 in Anlage an der Hakenrückseite 24 an einem ersten, unteren Endpunkt der Relativbewegung der beiden Rastelemente 14, 22 ist in der Figur in durchgezogenen Linien dargestellt, während die Position des Rastabschnitts 22 an einem zweiten, oberen Endpunkt in gepunkteten Linien dargestellt ist.

Der Verschiebeweg W könnte auch über einen Anlagebereich realisiert sein, dessen Schräge entgegengesetzt dem gezeigten Anlagebereich 20 orientiert ist, so wie es in der Figur zum Beispiel am oberen Ende der Einbuchtung 16 dargestellt ist.

Die erforderliche Vorspannung F kann entweder durch die Eigenelastizität des zweiten Rastelementes realisiert sein, indem dieses zum Beispiel aus einem Federdraht gebildet ist, oder es könnte ein separates Federelement (nicht gezeigt) vorgesehen sein, das den Rastabschnitt 22 des zweiten Rastelementes in Richtung des Anlagebereichs 20 vorspannt.

Zum Schließen der Rastverbindung wird das Gassackmodul 10 in Bewegungsrichtung R in das Lenkrad eingesetzt. Hierbei erlaubt die Eigenelastizität des zweiten Rastelements bzw. das die Vorspannung F erzeugende Federelement eine Seitwärtsbewegung des Rastabschnitts 22 durch die Einschubrampe 18, so daß das freie Ende des Rastbolzens 14 am Rastabschnitt 22 vorbeigleiten kann. Bei geschlossener Rastverbindung 14, 22 liegt dann ein langgestreckter Teil des den Rastabschnitt 22 bildenden Federdrahtes an dem in der Einbuchtung 16 des Rastbolzens 14 ausgebildeten, schräg verlaufenden Anlagebereich 20 an.

Das Prinzip der erfindungsgemäßen Baugruppe läßt sich auch auf jede andere Rastverbindung übertragen, bei der entsprechende Rastelemente vorgesehen sind, die um einen gewissen Betrag gegeneinander bewegbar sein sollen.

## Patentansprüche

1. Baugruppe zur Befestigung eines Gassackmoduls (10) an einem Fahrzeug, insbesondere in einem Lenkrad,
mit einem ersten und einem zweiten, miteinander in Eingriff stehenden Rastelement, die bei geschlossener Rastverbindung (14, 22) in einer Bewegungsrichtung (R) über einen definierten Verschiebeweg (W) relativ zueinander bewegbar sind,
wobei das erste Rastelement (14) eine Einbuchtung (16) aufweist, in der ein schräg zur Bewegungsrichtung (R) verlaufender Anlagebereich (20) ausgebildet ist und
das zweite Rastelement wenigstens einen Rastabschnitt (22) aufweist, der mit dem Anlagebereich (20) in Anlage bringbar ist,
wobei wobei der Rastabschnitt (22) über den gesamten Verschiebeweg (W) unter Vorspannung (F) am Anlagebereich (20) anliegt.

2. Baugruppe nach Anspruch 1, **dadurch gekennzeichnet, daß** der Anlagebereich (20) konkav gekrümmt ist.

3. Baugruppe nach einem der vorhergehenden Ansprüche, **dadurch gekennzeichnet, daß** der Anlagebereich (20) über den gesamten Verschiebeweg (W) schräg zur Bewegungsrichtung (R) verläuft.

4. Baugruppe nach einem der vorhergehenden Ansprüche, **dadurch gekennzeichnet, daß** der Verschiebeweg (W) der Hub zur Betätigung einer Hupe ist.

5. Baugruppe nach einem der vorhergehenden Ansprüche, **dadurch gekennzeichnet, daß** der Rastabschnitt (22) Teil eines Federdrahts ist.

6. Baugruppe nach einem der vorhergehenden Ansprüche, **dadurch gekennzeichnet, daß** die Einbuchtung (16) an einem Rasthaken ausgebildet ist.

7. Baugruppe nach Anspruch 6, **dadurch gekennzeichnet, daß** die Einbuchtung (16) unmittelbar nach einer sich senkrecht zur Bewegungsrichtung (R) erstreckenden Hakenrückseite (24) schräg verläuft.

8. Baugruppe nach einem der Ansprüche 6 und 7, **dadurch gekennzeichnet, daß** der Rasthaken ein Rastbolzen (14) ist.

9. Baugruppe nach einem der vorhergehenden Ansprüche, **dadurch gekennzeichnet, daß** der Anlagebereich (20) zu einem freien, verdickten Ende des ersten Rastelements hin schräg nach außen verläuft.

10. Baugruppe nach einem der vorhergehenden Ansprüche, **dadurch gekennzeichnet, daß** das erste Rastelement (14) mit dem Gassackmodul (10) und das zweite Rastelement mit einem Lenkradskelett (12) verbunden ist.
